# EUROPÄISCHE PATENTSCHRIFT

(11) **EP 0 799 369 B1**
(45) Veröffentlichungstag und Bekanntmachung des Hinweises auf die Patenterteilung: **03.06.1998**
(21) Anmeldenummer: 95938458.7
(22) Anmeldetag: 21.11.1995
(51) Int. Cl.: F01N 3/28

(54) **DOPPELWANDIGES GEHÄUSE, INSBESONDERE FÜR ABGAS-KATALYSATOREN VON KRAFTFAHRZEUGEN**
DOUBLE-WALLED HOUSING, ESPECIALLY FOR CATALYTIC CONVERTERS IN MOTOR VEHICLES
ENVELOPPE A DOUBLE PAROI, EN PARTICULIER POUR LES CATALYSEURS DE GAZ D'ECHAPPEMENT DE VEHICULES

(30) Priorität: 20.12.1994 DE 4445557
(43) Veröffentlichungstag der Anmeldung: 08.10.1997
(73) Patentinhaber: Emitec Gesellschaft für Emissionstechnologie mbH, 53797 Lohmar (DE)
(72) Erfinder: Wieres, Ludwig, D-51491 Overath (DE)
(74) Vertreter: Kahlhöfer, Hermann, Dipl.-Phys.
(86) Internationale Anmeldenummer: EP9504585
(87) Internationale Veröffentlichungsnummer: WO9619647

(56) Entgegenhaltungen:
- WO-A-90/04087
- FR-A- 2 151 322
- US-A- 3 841 839
- US-A- 5 293 743
- PATENT ABSTRACTS OF JAPAN vol. 12 no. 169 (M-699) ,20.Mai 1988 & JP,A,62 284915 (NIPPON RADIATOR) 10.Dezember 1987,

## Beschreibung

Die vorliegende Erfindung bezieht sich auf ein doppelwandiges Gehäuse, insbesondere für Abgas-Katalysatoren von Kraftfahrzeugen, welche einen metallischen, für Abgas durchströmbaren Katalysator-Trägerkörper enthalten.

Katalysator-Trägerkörper sind in vielfältigen Formen bekannt. Ein Beispiel für einen metallischen Katalysator-Trägerkörper ist aus der EP-A-0 245 737 entnehmbar. Der Katalysator-Körper kann beispielsweise aus Blechen aufgebaut oder auch pulvermetallurgisch hergestellt werden.

Solche Katalysator-Trägerkörper werden in einem Gehäuse angeordnet. Wegen der durch thermische Wechselbelastungen entstehenden mechanischen Spannungen in einem solchen Körper sind bereits Vorschläge unterbreitet worden, wie diese durch entsprechende Formgebung oder durch besondere Ausgestaltung der Ummantelung verringert werden können.

Durch die EP-B-0 435 956 ist ein doppelwandiges Gehäuse für Abgas-Katalysatoren, insbesondere für Kraftfahrzeuge, bekannt. Der wabenförmige Katalysator-Trägerkörper wird von einem inneren Mantelrohr getragen, welches in einem äußeren Mantelrohr angeordnet ist. Das innere Mantelrohr ist längendehnbar in dem äußeren Mantelrohr angeordnet. Die freie Längendehnbarkeit wird durch einen Schiebesitz erreicht.

Durch die DE-U 74 01 002 ist ein Gehäuse für einen Katalysator-Trägerkörper bekannt, welches einen inneren und einen äußeren Mantel aufweist. Dieses Gehäuse dient der Aufnahme eines keramischen Katalysator-Trägerkörpers. Zwischen dem inneren Mantel und dem Katalysator-Trägerkörper ist eine kompressible poröse Dämpfungsschicht angeordnet.

Zur Einhaltung immer strenger werdender Umweltgesetze kommt es in zunehmendem Maße auch auf die Kalt- und Wiederstarteigenschaften von Abgaskatalysatoren an. Für diese Eigenschaften spielen die Wärmeisolationseigenschaften von Gehäusen eine wichtige Rolle, so daß hier Verbesserungen bei gleichzeitig wirtschaftlicher Herstellbarkeit gesucht werden.

Aufgabe der vorliegenden Erfindung ist es daher, ein doppelwandiges Gehäuse, insbesondere als Ummantelung für einen Katalysator zu schaffen, das einfach und kostengünstig herstellbar ist, eine große Stabilität und günstige Wärmeisolationseigenschaften aufweist. Das Gehäuse soll auch für andere, z.B. konische Abschnitte eines Abgassystems geeignet sein, insbesondere im Hinblick auf seine Wärmeisolationseigenschaften.

Die Lösung dieser Aufgabe wird durch ein doppelwandiges Gehäuse mit den Merkmalen des Anspruchs 1 bzw. durch ein Verfahren zu dessen Herstellung nach dem Anspruch 17 erreicht. Vorteilhafte Ausgestaltungen sind in den jeweils abhängigen Ansprüchen beschrieben und werden anhand der in der Zeichnung dargestellten Ausführungsbeispiele näher beschrieben.

Das doppelwandige Gehäuse, insbesondere für Abgas-Katalysatoren von Kraftfahrzeugen, weist eine inneren Mantel und einen äußeren Mantel auf, der den inneren Mantel mit Abstand etwa konzentrisch umgibt, wobei der innere Mantel und der äußere Mantel an beiden Stirnseiten dicht aneinander liegen. Dabei wird der innere Mantel zumindest an beiden Endbereichen durch Einschnürungen des äußeren Mantels unter Druckspannung gehalten wird, und der äußere Mantel ist mit zum inneren Mantel hin gerichteten Prägungen versehen. Dabei sind die Prägungen vorzugsweise etwa gleichmäßig über die Länge des Gehäuses und den Umfang verteilt, um eine gleichmäßige mechanische Stabilität zu erreichen.

Die Mäntel können aus Blechen bestehen, deren Gesamtwandstärke geringer ist als die Dicke der bisher bekannten Gehäusewandungen. Um eine hinreichend hohe Stabilität des Gehäuses zu erhalten, ist der äußere Mantel mit zum inneren Mantel hin gerichteten Prägungen versehen, die vorzugsweise symmetrisch auf dem äußeren Mantel ausgebildet sind. Diese Prägungen sind vorzugsweise so ausgebildet, daß sie dem Gehäuse eine hohe Stabilität sowohl in einer radialen als auch in einer tangentialen Richtung verleihen. Dadurch und durch den als thermische Innenisolierung wirkenden, zwischen den beiden Mänteln ausgebildete Zwischenraum kann das innere Mantelrohr sich schneller mit dem Katalysator-Trägerkörper aufwärmen und insgesamt eine höhere Temperatur erreichen als ohne den äußeren Mantel. Durch diese Eigenschaft verringern sich die thermischen Spannungen im Inneren des Katalysator-Trägerkörpers. Desweiteren ist der innere Mantel keinen äußeren Einflüssen ausgesetzt, so daß hinsichtlich der Werkstoffauswahl ein breiteres Spektrum zulässig ist. Durch diese Eigenschaften des Gehäuses kann der innere Mantel auch hinsichtlich seiner Wanddicke reduziert werden.

Die Wärmeisolationseigenschaften des Gehäuses können auch dadurch gezielt eingestellt werden, daß ein Teil der Prägungen im äußeren Mantel den inneren Mantel berührt oder daß zusätzliche isolierende Schichten oder Beschichtungen an oder zwischen den beiden Mänteln vorgesehen werden. Neben der Wärmeleitung, die am besten durch einen Spalt zwischen beiden Mänteln reduziert wird, spielt Konvektion, die am besten durch eine keramische Zwischenschicht verhindert wird, eine Rolle. Wichtig bei höheren Temperaturen ist aber auch die Wärmestrahlung, die sich durch geeignete Beschichtungen vermindern oder reflektieren läßt. Das erfindungsgemäße Gehäuse bietet die Möglichkeit, diese Eigenschaften gezielt an Anforderungen, insbesondere bei Katalysatoren anzupassen. Dadurch können die Kaltstarteigenschaften und die Wiederstarteigenschaften eines solchen Katalysators verbessert werden.

Erfindungsgemäß besteht das äußere Rohr aus einem rund bzw. konisch geformten, vorzugsweise gewalzten, Blech, und die aufeinandertreffenden Kanten werden fügetechnisch miteinander verbunden. Unter dem Begriff "rundgewalzt" sind auch andere als runde Querschnittsformen zu verstehen, bei denen es sich z. B. um ovale oder eliptische Formen handeln kann.

Gemäß einem weiteren vorteilhaften Gedanken besteht der innere Mantel aus einem rundgewalzten Blech mit einer sich über die gesamte Länge des Mantels erstreckenden Trennfuge. Diese Ausbildung hat den Vorteil, daß die Herstellung vereinfacht wird, da der innere Mantel, in Umfangsrichtung desselben betrachtet, nicht geschlossen ist und somit eine Naht weniger hergestellt werden muß.

Ein Verfahren zur Herstellung eines erfindungsgemäßen doppelwandigen Gehäuses umfaßt folgende Schritte:
- der innere Mantel wird durch Umformen, vorzugsweise Walzen, eines Blechs in zylindrische oder konische Form unter Beibehaltung einer Trennfuge gebildet,
- der äußere Mantel wird durch Umformen, vorzugsweise Walzen, eines Blechs in zylindrische oder konische Form und fügetechnisches Verbinden der aufeinandertreffenden Kanten gebildet,
- der innere Mantel wird in dem äußeren Mantel angeordnet,
- der äußere Mantel wird an beiden Stirnseiten in seinen Endbereichen über den gesamten Umfang plastisch nach innen verformt, so daß der innere Mantel unter Druckspannung gehalten wird, wobei der äußere Mantel vorher oder gleichzeitig mit zum inneren Mantel hin gerichteten Prägungen versehen wird. Dabei kann vor dem Verformen des äußeren Mantels zwischen den inneren Mantel und den äußeren Mantel eine Isolierschicht eingelegt werden.

Auch kann das innere Mantelrohr auf seiner Außenseite und/oder das äußere Mantelrohr auf seiner Innenseite mit einer die Strahlungseigenschaften beeinflussenden Beschichtung, z.B. einer Oxidschicht, versehen werden. Beim späteren Einbau können dann die stirnseitigen Enden von innerem und äußerem Mantelrohr vor oder bei dem Verbinden mit einem benachbarten Teil miteinander verschweißt werden.

Weitere Vorteile und Merkmale der Erfindung werden anhand eines bevorzugten Ausführungsbeispiels, nämlich eines Abgas-Katalysators, erläutert. Es zeigen:
- Fig. 1: einen Abgas-Katalysator mit erfindungsgemäßem doppelwandigem Gehäuse im Längsschnitt,
- Fig. 2a bis 2d: schematisch den Herstellungsgang eines solchen Gehäuses.

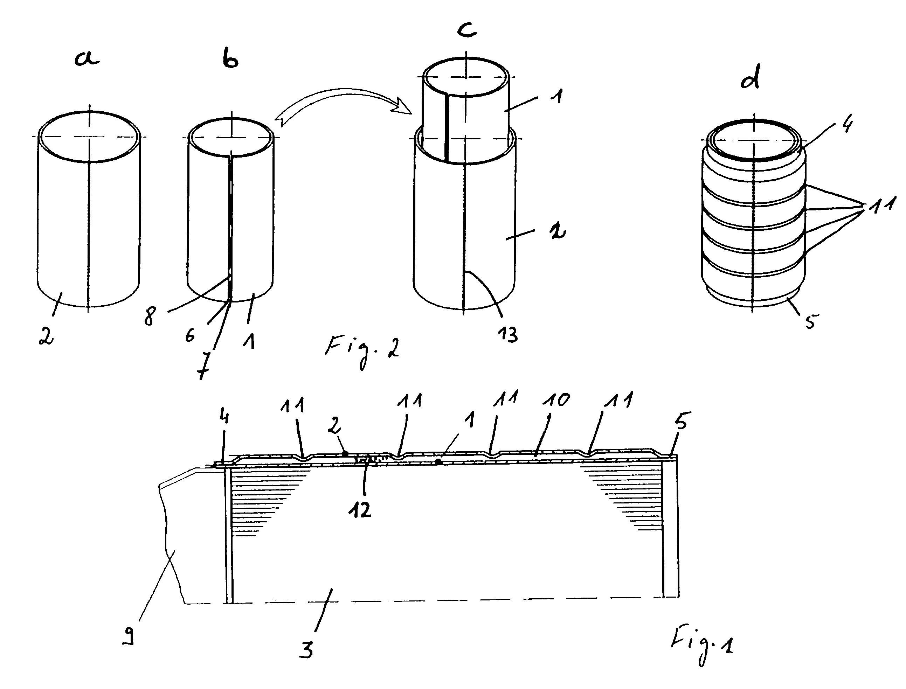

Figur 1 zeigt das Prinzip der vorliegenden Erfindung anhand eines Abgas-Katalysators, der einen Katalysator-Trägerkörper 3 enthält. Bei dem Katalysator-Trägerkörper 3 handelt es sich um einen z.B. aus Metallblechen hergestellten Wabenkörper, welcher von einem inneren Mantel 1 umschlossen ist. Der innere Mantel 1 steht an beiden Enden über den metallischen Katalysator-Trägerkörper 3 über. Der innere Mantel 1 ist von einem äußeren Mantel 2 konzentrisch umgeben. Der äußere Mantel 2 weist eine dem inneren Mantel 1 entsprechende Länge auf. Die äußeren Endbereiche 4, 5 des äußeren Mantels 2 sind zum inneren Mantel 1 hin verformt, liegen an dem inneren Mantel 1 an und setzen diesen unter Druckspannung. Wie aus der Figur 1 ersichtlich ist, sind die Mäntel 1, 2 im späteren Einbauzustand miteinander und mit einem Abgasrohr 9 eines Abgassystems verbunden. Die Verbindung ist durch Schweißen hergestellt. Eine entsprechende Verbindung mit einem weiteren Abgasrohr auf der rechten Seite der Figur 1 ist nicht dargestellt.

Zwischen dem inneren Mantel 1 und dem äußeren Mantel 2 ist ein ringförmiger Zwischenraum 10 ausgebildet, welcher vor allem als thermische Isolierung dient. Das äußere Mantelrohr ist mit Prägungen 11 versehen, die vorzugsweise umlaufend und gleichmäßig über die Länge des Gehäuses verteilt ausgebildet sind. Die Prägungen 11 sind zum inneren Mantelrohr 1 hin gerichtet. In dem dargestellten Ausführungsbeispiel berühren die Prägungen 11 das innere Mantelrohr 1 nicht, so daß keine zusätzlichen Wärmebrücken zwischen dem inneren und dem äußeren Mantel entstehen. Es ist möglich, falls dies notwendig ist, die Prägungen bis zur Anlage an den inneren Mantel 1 auszubilden. Auch eine Mischung aus nichtanliegenden und anliegenden Prägungen an das innere Mantelrohr ist möglich. Zusätzlich kann in dem Zwischenraum 10 auch eine Isolierschicht angeordnet werden. Das doppelwandige Gehäuse hat durch seinen besonderen Aufbau eine hohe mechanische Stabilität. Insbesondere verleihen die Prägungen 11 dem Gehäuse eine große Beständigkeit gegen radiale Verformungen, so daß beispielsweise ein Gehäuse, bei dem innerer und äußerer Mantel je etwa 0,5 mm Wandstärke haben und der Zwischenraum 0,3 bis 2mm groß ist, die Stabilität eines einwandigen Gehäuses mit etwa 1,5 mm Wanddicke erreicht, aber weniger wiegt und bessere Wärmeisolationseigenschaften hat.

Das in Figur 1 dargestellte Gehäuse kann wie unten anhand der Fig. 2 beschrieben hergestellt werden. Dabei handelt es sich nur um ein Ausführungsbeispiel. Andere Herstellungsverfahren sind möglich, und es können insbesondere auch konische Körper analog hergestellt werden, die als Einlaß- oder Auslaßkonus von Katalysatoren vorteilhaft sein können, da sie die Wärmeverluste beim Kalt- oder Wiederstart verringern.

Ein im wesentlichen rechteckförmiges Blech wird zu einem zylinderförmigen Mantel 2 gewalzt. Die einanderstoßenden Kanten des Mantels werden miteinander verschweißt 13. Ein weiteres Blech wird zum inneren Mantel 1 im wesentlichen rundgewalzt. Wie aus der Figur 2 ersichtlich ist, weist der innere Mantel eine durch die gegenüberliegenden Kanten 6, 7 definierte Trennfuge 8 auf.

Die so hergestellten Mäntel 1, 2 werden, ggf. mit einer isolierenden Zwischenlage 12 ineinander geschoben. Vorzugsweise wird der innere Mantel so angeordnet, daß die Trennfuge nicht unmittelbar über der Schweißnaht liegt.

Die ineinander gesteckten Mäntel werden anschließend vorzugsweise an ihren Endbereichen verformt, so daß der Querschnitt des Gehäuses im wesentlichen dem äußeren Querschnitt eines Katalysator-Trägerkörpers entspricht. Dabei wird der äußere Mantel 2 bezüglich seines Umfanges plastisch verformt, so daß er den inneren Mantel 1 berührt und unter Druckspannung hält, wobei der innere Mantel zumindest elastisch verformt wird. Auf dem äußeren Mantel 2 können vorher oder gleichzeitig Prägungen 11 ausgebildet werden. Wie aus den Figuren 1 und 2 ersichtlich ist, handelt es sich bei den Prägungen bevorzugt um umlaufende am Umfang des Mantels 2 ausgebildete Sicken. Diese Prägungen sollten etwa gleichmäßig über die Länge des Gehäuses verteilt sein. Umlaufende Sicken geben dem Gehäuse eine gewisse Längselastizität zum Ausgleich von Wärmespannungen zwischen innerem 1 und äußerem 2 Mantel, wie bei einem Faltenbalg. Wenn ein solcher Effekt unerwünscht ist, können aber auch andere Arten von Prägungen vorgesehen werden, die dem äußeren Mantel in allen gewünschten Richtungen zusätzliche Stabilität geben. Äußerer 2 und innerer 1 Mantel können auch aus unterschiedlichen Materialien bestehen, z.B. Ferrit und Austenit, um die Eigenschaften insgesamt zu optimieren.

Zur gezielten Beeinflussung der Wärmeleiteigenschaften können die Außenseite des inneren Mantels 1 und/oder die Innenseite des äußeren Mantels 2 zusätzlich mit einer Beschichtung versehen werden, die die Wärmeübertragung durch Strahlung, die bei den in Abgaskatalysatoren auftretenden Temperaturen schon eine wichtige Rolle spielt, verringert. Hierfür kommen besondere Oxidschichten oder Reflektierende Schichten in Betracht.

Die vorliegende Erfindung eignet sich besonders für Abgas-Katalysatoren in Kraftfahrzeugen, die besonders strenge Umweltschutzbestimmungen erfüllen sollen, da das Anspringverhalten beim Kalt- und Warmstart verbessert werden kann.

### BEZUGSZEICHENLISTE

- 1: innerer Mantel
- 2: äußerer Mantel
- 3: Katalysator-Trägerkörper
- 4, 5: Endbereiche
- 6, 7: Kanten
- 8: Trennfuge
- 9: Abgasrohr
- 10: Ringraum, Zwischenraum
- 11: Prägung
- 12: Isolierschicht
- 13: Schweißnaht

## Patentansprüche

1. Doppelwandiges Gehäuse, insbesondere für Abgas-Katalysatoren von Kraftfahrzeugen, mit einem inneren Mantel (1), einem äußeren Mantel (2), der den inneren Mantel (1) mit Abstand etwa konzentrisch umgibt, wobei der innere Mantel (1) und der äußere Mantel (2) an beiden Stirnseiten dicht aneinander liegen, dadurch gekennzeichnet, daß der innere Mantel (1) zumindest an beiden Endbereichen (4, 5) durch Einschnürungen des äußeren Mantels (2) unter Druckspannung gehalten wird, und daß der äußere Mantel (2) mit zum inneren Mantel (1) hin gerichteten Prägungen (11) versehen ist.

2. Doppelwandiges Gehäuse nach Anspruch 1, dadurch gekennzeichnet, daß die Prägungen (11) in Umfangsrichtung umlaufend auf dem äußeren Mantel (2) ausgebildet sind, vorzugsweise als umlaufende Innensicken.

3. Doppelwandiges Gehäuse nach Anspruch 1 oder 2, dadurch gekennzeichnet, daß die Prägungen (11) den inneren Mantel (1) nicht berühren.

4. Doppelwandiges Gehäuse nach Anspruch 1 oder 2, dadurch gekennzeichnet, daß die Prägungen (11) den inneren Mantel (1) zumindest teilweise berühren.

5. Doppelwandiges Gehäuse nach Anspruch 1, 2 oder 3, dadurch gekennzeichnet, daß zwischen dem äußeren Mantel (2) und dem inneren Mantel (1) mindestens eine thermisch isolierende Schicht (12) oder Beschichtung vorhanden ist.

6. Doppelwandiges Gehäuse nach Anspruch 5, dadurch gekennzeichnet, daß die thermisch isolierende Beschichtung eine die Strahlungseigenschaften bzw. Reflexionseigenschaften beeinflussende Schicht (12) ist.

7. Doppelwandiges Gehäuse nach einem der vorhergehenden Ansprüche, dadurch gekennzeichnet, daß das Gehäuse einen zylindrischen Innenraum aufweist, vorzugsweise mit einem darin eingebauten Katalysator-Trägerkörper (3).

8. Doppelwandiges Gehäuse nach einem der Ansprüche 1 bis 6, dadurch gekennzeichnet, daß das Gehäuse einen konischen Innenraum aufweist, vorzugsweise mit einem darin eingebauten Katalysator-Trägerkörper.

9. Doppelwandiges Gehäuse nach einem der vorhergehenden Ansprüche, dadurch gekennzeichnet, daß der äußere Mantel (2) aus einem gewalzten Blech besteht und die aufeinander treffenden Kanten fügetechnisch (13) miteinander verbunden sind.

10. Doppelwandiges Gehäuse nach Anspruch 9, dadurch gekennzeichnet, daß die Kanten miteinander verschweißt (13) sind, insbesondere laserverschweißt.

11. Doppelwandiges Gehäuse nach einem der vorhergehenden Ansprüche, dadurch gekennzeichnet, daß der innere Mantel (1) ein geformtes, vorzugsweise rundgewalztes oder konischgewalztes, Blech mit einer Trennfuge (8) ist.

12. Doppelwandiges Gehäuse nach Anspruch 11, dadurch gekennzeichnet, daß die die Trennfuge (8) definierenden Ränder (6, 7) des inneren Mantels (1) durch den äußeren Mantel (2) aneinandergepreßt sind.

13. Doppelwandiges Gehäuse nach einem der vorhergehenden Ansprüche, dadurch gekennzeichnet, daß das innere Mantelrohr (2) eine Wanddicke von 0,3 bis 1 mm, vorzugsweise etwa 0,5 mm hat.

14. Doppelwandiges Gehäuse nach einem der vorhergehenden Ansprüche, dadurch gekennzeichnet, daß das äußere Mantelrohr (2) eine Wanddicke von 0,3 bis 1 mm, vorzugsweise etwa 0,5 mm hat

15. Doppelwandiges Gehäuse nach einem der vorhergehenden Ansprüche, dadurch gekennzeichnet, daß der maximale Abstand zwischen innerem (1) und äußerem (2) Mantelrohr etwa 0,3 bis 4 mm, vorzugsweise etwa 0,5 bis 1 mm beträgt.

16. Doppelwandiges Gehäuse nach einem der vorhergehenden Ansprüche, dadurch gekennzeichnet, daß die Prägungen (11) etwa gleichmäßig über die Länge des Gehäuses verteilt sind.

17. Verfahren zur Herstellung eines doppelwandigen Gehäuses, insbesondere für Abgas-Katalysatoren von Kraftfahrzeugen, mit einem inneren Mantel (1) und einem äußeren Mantel (2), der den inneren Mantel (1) mit Abstand etwa konzentrisch umgibt, wobei der innere Mantel (1) und der äußere Mantel (2) an beiden Strinseiten dicht aneinanderliegen,
dadurch gekennzeichnet,
- daß der innere Mantel (1) durch Umformen, vorzugsweise Walzen, eines Blechs in zylindrische oder konische Form unter Beibehaltung einer Trennfuge (8) gebildet wird,
- daß der äußere Mantel (2) durch Umformen, vorzugsweise Walzen, eines Blechs in zylindrische oder konische Form und fügetechnisches Verbinden der aufeinander treffenden Kanten (6, 7) gebildet wird,
- daß der innere Mantel (1) in dem äußeren Mantel (2) angeordnet wird,
- daß der äußere Mantel (2) an beiden Stirnseiten über den gesamten Umfang plastisch nach innen verformt wird, so daß der innere Mantel unter Druckspannung gehalten wird, wobei der äußere Mantel (2) vorher oder gleichzeitig mit zum inneren Mantel (1) hin gerichteten Prägungen (11) versehen wird.

18. Verfahren nach Anspruch 17, dadurch gekennzeichnet, daß vor dem Verformen des äußeren Mantels (2) zwischen den inneren Mantel (1) und den äußeren Mantel (2) eine Isolierschicht eingelegt wird.

19. Verfahren nach Anspruch 17 oder 18, dadurch gekennzeichnet, daß das innere Mantelrohr (1) auf seiner Außenseite und/oder das äußere Mantelrohr (2) auf seiner Innenseite mit einer die Strahlungseigenschaften beeinflussenden Beschichtung, z.B. einer Oxidschicht, versehen wird.

20. Verfahren nach einem der Ansprüche 17 bis 19, dadurch gekennzeichnet, daß die stirnseitigen Enden von innerem (1) und äußerem (2) Mantelrohr vor oder bei dem Verbinden mit einem benachbarten Teil (9) miteinander verschweißt werden.

## Claims

1. A double-wall housing, in particular for exhaust gas catalytic converters of motor vehicles, comprising an inner casing (1) and an outer casing (2) which approximately concentrically surrounds the inner casing (1) at a spacing, wherein the inner casing (1) and the outer casing (2) bear sealingly against each other at both ends, characterised in that at least at both end regions (4, 5) the inner casing (1) is held under a compression stress by constriction portions of the outer casing (2) and that the outer casing (2) is provided with impression portions (11) directed towards the inner casing (1).

2. A double-wall housing according to claim 1 characterised in that the impression portions (11) are formed extending on the outer casing (2) in the peripheral direction therearound, preferably in the form of peripherally extending internal beads.

3. A double-wall housing according to claim 1 or claim 2 characterised in that the impression portions (11) do not touch the inner casing (1).

4. A double-wall housing according to claim 1 or claim 2 characterised in that the impression portions (11) at least partially touch the inner casing (1).

5. A double-wall housing according to claim 1, claim 2 or claim 3 characterised in that there is at least one heat-insulating layer (12) or coating between the outer casing (2) and the inner casing (1).

6. A double-wall housing according to claim 5 characterised in that the heat-insulating coating is a layer (12) which influences the radiation properties or the reflection properties.

7. A double-wall housing according to one of the preceding claims characterised in that the housing has a cylindrical internal space, preferably with a catalyst carrier body (3) fitted therein.

8. A double-wall housing according to one of claims 1 to 6 characterised in that the housing has a conical internal space, preferably with a catalyst carrier body fitted therein.

9. A double-wall housing according to one of the preceding claims characterised in that the outer casing (2) comprises a rolled sheet and the edges which meet are connected together (13) by a procedure involving the intimate joining of materials.

10. A double-wall housing according to claim 9 characterised in that the edges are welded (13) together, in particular laser-welded.

11. A double-wall housing according to one of the preceding claims characterised in that the inner casing (1) is a shaped, preferably round-rolled or conically-rolled sheet with a separation line (8).

12. A double-wall housing according to claim 11 characterised in that the edges (6, 7) of the inner casing (1), that define the separation line-(8), are pressed against each other by the outer casing (2).

13. A double-wall housing according to one of the preceding claims characterised in that the inner tubular casing (1) is of a wall thickness of 0.3 to 1 mm, preferably about 0.5 mm.

14. A double-wall housing according to one of the preceding claims characterised in that the outer tubular casing (2) is of a wall thickness of 0.3 to 1 mm, preferably about 0.5 mm.

15. A double-wall housing according to one of the preceding claims characterised in that the maximum spacing between the inner tubular casing (1) and the outer tubular casing (2) is about 0.3 to 4 mm, preferably about 0.5 to 1 mm.

16. A double-wall housing according to one of the preceding claims characterised in that the impression portions (11) are approximately uniformly distributed over the length of the housing.

17. A process for the production of a double-wall housing, in particular for exhaust gas catalytic converters of motor vehicles, comprising an inner casing (1) and an outer casing (2) which approximately concentrically surrounds the inner casing (1) at a spacing, wherein the inner casing (1) and the outer casing (2) bear sealingly against each other at both ends, characterised in that
- the inner casing (1) is formed by shaping and preferably rolling a metal sheet into cylindrical or conical form while retaining a separation line (8),
- the outer casing (2) is formed by shaping and preferably rolling a metal sheet into cylindrical or conical form and connecting the edges (6, 7) that meet by a procedure involving intimate joining of the material involved,
- the inner casing (1) is arranged in the outer casing (2), and
- the outer casing (2) is plastically inwardly deformed at both ends over the entire periphery so that the inner casing is held under a compression stress, wherein the outer casing (2) is previously or simultaneously provided with impression portions (11) directed towards the inner casing (1).

18. A process according to claim 17 characterised in that an insulating layer is inserted prior to shaping of the outer casing (2) between the inner casing (1) and the outer casing (2).

19. A process according to claim 17 or claim 18 characterised in that the inner tubular casing (1) on its outside and/or the outer tubular casing (2) on its inside is provided with a coating for influencing the radiation properties, for example an oxide layer.

20. A process according to one of claims 17 to 19 characterised in that the end portions of the inner tubular casing (1) and the outer tubular casing (2) are welded together before or upon being connected to an adjacent member (9).

## Revendications

1. Carter à double paroi, destiné notamment à des catalyseurs de gaz d'échappement de véhicules automobiles, comportant une enveloppe intérieure (1), une enveloppe extérieure (2) qui entoure l'enveloppe intérieure (1) à un certaine distance de façon approximativement concentrique, l'enveloppe intérieure (1) et l'enveloppe extérieure (2) s'appliquant étroitement l'une contre l'autre au niveau des deux faces frontales, caractérisé en ce que, au moins au niveau des deux zones d'extrémité (4, 5), l'enveloppe intérieure (1) est maintenue sous contrainte de compression par des rétrécissements de l'enveloppe extérieure (2), et en ce que l'enveloppe extérieure (2) est munie d'empreintes (11) orientées en direction de l'enveloppe intérieure (1).

2. Carter à double paroi selon la revendication 1, caractérisé en ce que les empreintes (11) sont formées en s'étendant sur l'enveloppe extérieure (2) dans la direction circonférentielle, de préférence sous la forme de moulures intérieures circonférentielles.

3. Carter à double paroi selon la revendication 1 ou 2, caractérisé en ce que les empreintes (11) ne sont pas en contact avec l'enveloppe intérieure (1).

4. Carter à double paroi selon la revendication 1 ou 2, caractérisé en ce que les empreintes (11) sont en contact, au moins partiel, avec l'enveloppe intérieure (1).

5. Carter à double paroi selon la revendication 1, 2 ou 3, caractérisé en ce qu'il est prévu au moins une couche d'isolation thermique (12) ou un revêtement entre l'enveloppe extérieure (2) et l'enveloppe intérieure (1).

6. Carter à double paroi selon la revendication 5, caractérisé en ce que le revêtement d'isolation thermique est une couche (12) influençant les propriétés de rayonnement ou les propriétés de réflexion.

7. Carter à double paroi selon l'une quelconque des revendications précédentes, caractérisé en ce que le carter comporte un espace intérieur cylindrique, dans lequel est de préférence disposé un corps de support (3) de catalyseur.

8. Carter à double paroi selon l'une quelconque des revendications 1 à 6, caractérisé en ce que le carter comporte un espace intérieur conique, dans lequel est de préférence disposé un corps de support de catalyseur.

9. Carter à double paroi selon l'une quelconque des revendications précédentes, caractérisé en ce que l'enveloppe extérieure (2) est constituée d'une tôle laminée, et en ce que les bords qui se rejoignent sont reliés entre eux par technique d'assemblage (13).

10. Carter à double paroi selon la revendication 9, caractérisé en ce que les bords sont soudés (13) entre eux, notamment soudés au laser.

11. Carter à double paroi selon l'une quelconque des revendications précédentes, caractérisé en ce que l'enveloppe intérieure (1) est une tôle formée, de préférence laminée de façon circulaire ou conique, comportant un joint de dilatation (8).

12. Carter à double paroi selon la revendication 11, caractérisé en ce que les bords (6, 7) définissant le joint de dilatation (8) de l'enveloppe intérieure (1) sont pressés l'un contre l'autre par l'enveloppe extérieure (2).

13. Carter à double paroi selon l'une quelconque des revendications précédentes, caractérisé en ce que le tube d'enveloppe intérieure (2) a une épaisseur de paroi de 0,3 à 1 mm, de préférence de l'ordre de 0,5 mm.

14. Carter à double paroi selon l'une quelconque des revendications précédentes, caractérisé en ce que le tube d'enveloppe extérieure (2) a une épaisseur de 0,3 à 1 mm, de préférence de l'ordre de 0,5 mm.

15. Carter à double paroi selon l'une quelconque des revendications précédentes, caractérisé en ce que la distance maximale entre les tubes d'enveloppe intérieure (1) et extérieure (2) est de l'ordre de 0,3 à 4 mm, de préférence de l'ordre de 0,5 à 1 mm.

16. Carter à double paroi selon l'une quelconque des revendications précédentes, caractérisé en ce que les empreintes (11) sont réparties sensiblement uniformément sur la longueur du carter.

17. Procédé de fabrication d'un carter à double paroi, destiné notamment à des catalyseurs de gaz d'échappement de véhicules automobiles, comportant une enveloppe intérieure (1) et une enveloppe extérieure (2) qui entoure l'enveloppe intérieure (1) à une certaine distance de façon approximativement concentrique, l'enveloppe intérieure (1) et l'enveloppe extérieure (2) s'appliquant étroitement l'une contre l'autre au niveau des deux faces frontales,
caractérisé en ce que
- l'enveloppe intérieure (1) est réalisée par déformation, de préférence par laminage, d'une tôle en une forme cylindrique ou conique avec maintien d'un joint de dilatation (8),
- l'enveloppe extérieure (2) est réalisée -par déformation, de préférence par laminage, d'une tôle en une forme cylindrique ou conique, et par liaison par technique d'assemblage des bords (6, 7) se rejoignant,
- l'enveloppe intérieure (1) est disposée dans l'enveloppe extérieure (2),
- l'enveloppe extérieure (2) est déformée plastiquement vers l'intérieur sur l'ensemble de la circonférence des deux faces frontales, de sorte que l'enveloppe intérieure soit maintenue sous contrainte de compression, l'enveloppe extérieure (2) étant munie auparavant ou simultanément d'empreintes (11) orientées en direction de l'enveloppe intérieure (1).

18. Procédé selon la revendication 17, caractérisé en ce qu'une couche isolante est insérée entre l'enveloppe intérieure (1) et l'enveloppe extérieure (2) avant la déformation de l'enveloppe extérieure (2).

19. Procédé selon la revendication 17 ou 18, caractérisé en ce que la face extérieure de l'enveloppe intérieure (1) et/ou la face intérieure de l'enveloppe extérieure (2) est revêtue d'une couche influençant les propriétés de rayonnement, de préférence d'une couche d'oxydation.

20. Procédé selon l'une quelconque des revendications 17 à 19, caractérisé en ce que les extrémités frontales des tubes d'enveloppe intérieure (1) et extérieure (2) sont soudées entre elles avant ou lors de la liaison avec un élément (9) voisin.
